(19) Europäisches Patentamt
European Patent Office
Office européen des brevets

(11) **EP 1 690 764 B1**

(12) **EUROPÄISCHE PATENTSCHRIFT**

| | |
|---|---|
| (45) Veröffentlichungstag und Bekanntmachung des Hinweises auf die Patenterteilung:<br>**10.10.2007   Patentblatt 2007/41** | (51) Int Cl.:<br>**B60T 7/12** *(2006.01)*    **B60T 8/32** *(2006.01)*<br>**B60T 8/48** *(2006.01)* |

(21) Anmeldenummer: **06110317.2**

(22) Anmeldetag: **29.01.2003**

(54) **Verfahren und Vorrichtung zur Steuerung einer Bremsanlage**

Method and device for controlling a braking system

Méthode et dispositif de contrôle d'un système de freinage

(84) Benannte Vertragsstaaten:
**DE FR GB**

(43) Veröffentlichungstag der Anmeldung:
**16.08.2006   Patentblatt 2006/33**

(62) Dokumentnummer(n) der früheren Anmeldung(en) nach Art. 76 EPÜ:
**03100178.7 / 1 442 951**

(73) Patentinhaber: **Ford Global Technologies, LLC**
**Dearborn, MI 48126 (US)**

(72) Erfinder:
• **Urhahne, Joseph**
  **50259 Pulheim (DE)**
• **Risse, Hermann-Josef**
  **50767 Köln (DE)**

(74) Vertreter: **Drömer, Hans-Carsten**
**Ford-Werke Aktiengesellschaft,**
**Patentabteilung NH/DRP,**
**Henry-Ford-Strasse 1**
**50725 Köln (DE)**

(56) Entgegenhaltungen:
**DE-A1- 19 611 360        DE-A1- 19 950 162**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Steuerung der Bremsanlage eines Fahrzeugs. Dabei wird eine vorhandene Bremsanlage, die geeignet ist, ein Verfahren zur Stabilisierung eines Fahrzeugs bei kritischen dynamischen Fahrzuständen durchzuführen, soweit modifiziert, dass die Bremsanlage in der Lage ist, eine Anfahrhilfe für das Fahrzeug an Steigungen bereitzustellen. Die Erfindung betrifft weiterhin eine Bremsanlage, die dazu geeignet ist, das vorher beschriebene Verfahren durchzuführen.

Anfahrhilfen an Steigungen (auch "Hillholder" genannt) sind z. B. aus der DE 199 31 345 bekannt. Dabei werden die vorhandenen Möglichkeiten eines elektromechanischen Bremssystems um Sensoren bzw. Fahrerwunscherkennungssysteme erweitert, um so die gewünschte Komfortsteigerung zu erreichen.

In der DE 196 21 628 wird eine automatische Feststellbremsfunktion (Hillholder) vorgeschlagen, die aktiviert wird, sobald das Fahrzeug bei betätigter Betriebsbremse zum Stillstand kommt. Der dann herrschende Bremsdruck bzw. die sich daraus ergebende Bremskraft wird an wenigstens einer Radbremse unabhängig vom Ausmaß der Betätigung des Bremspedals gehalten bzw. aufgebaut und bei Lösen des Bremspedals wieder abgebaut. Eine derartige Hillholderfunktion vermeidet umfangreiche Sicherheitsmassnahmen, so übernimmt z. B. zur Anfahrunterstützung an Steigungen bei gleichzeitiger Betätigung von Brems- und Kupplungspedal bei Lösen des Bremspedals das Kupplungspedal die Aktivierung bzw. Deaktivierung der Hillholderfunktion.

Aus der DE 199 50 034 ist ein Verfahren bekannt, bei dem eine Hillholderfunktion mit einfachen Mitteln verwirklicht wird. Dabei wird nach erkanntem Stillstand des Fahrzeugs die Bremskraft aufrecht erhalten und nach Lösen des Bremspedals die Bremskraft z. B. nach einer gewissen Zeit wieder abgebaut.

Aus der DE 199 50 162 A1 ist ein Verfahren zur Verhinderung des Wegrollens eines Fahrzeugs beim Anfahren bekannt, bei dem wenigstens eine charakteristische Betätigungsgröße eines Bremspedals erfasst wird und ein Betriebsbremssteuerdruck dann aktiviert wird, wenn diese charakteristische Betätigungsgröße wenigstens ein vorgegebenes Kriterium erfüllt. Als charakteristische Betätigungsgröße wird eine positive Druckänderung des Betriebsbremssteuerdrucks oder ein positiver Membranweggradient eines Bremskraftverstärkers sowie ein sich daran anschließender negativer Druckgradient / Membranweggradient genutzt. Eine Deaktivierung des Betriebsbremssteuerdrucks wird zeitverzögert durchgeführt, nachdem das Bremspedal gelöst wurde, da dann davon ausgegangen wird, dass ein Anfahrvorgang durch Betätigen eines Gaspedals eingeleitet wird.

Aus der DE 196 11 360 A1 ist eine Einrichtung zur automatischen Betätigung einer hydraulischen Bremsanlage eines Straßenfahrzeuges zum Zweck der Aufrechterhaltung eines Fahrzeugstillstandes für die Dauer verkehrsbedingter Stillstandsphasen bekannt. Durch Einkopplung von Bremsdruck aus einer ohne Mitwirkung des Fahrers aktivierbaren Bremsdruckquelle in mindestens eine Radbremse des Fahrzeuges wird eine sichere Bremsung des Straßenfahrzeugs gewährleistet. Eine Aktivierung eines Stillstands-Bremsbetriebs wird Vorliegen einer Kombination von Signalen, die die Fahrgeschwindigkeit, die Motordrehzahl, die Bremspedalbetätigung und die Gangwahl umfassen, vorgenommen. Eine Beendigung des automatischen Stillstands-Bremsbetriebes erfolgt nur dann, wenn zusätzlich zu Sensor-Ausgangssignalen der Sensor-Anordnung, die einen Fahrerwunsch nach Wiederaufnahme des Fahrbetriebes erkennen lassen, auch SensorSignale anstehen, die, wiederum anhand von Plausibilitätskriterien, die Erfüllung sicherheitsrelevanter Nebenbedingungen signalisieren. Derartige Nebenbedingungen sind insbesondere, dass die Motorhaube geschlossen ist, dass der Fahrersitz besetzt ist und dass die Türen des Fahrzeuges geschlossen sind. Ist eine dieser Bedingungen nicht erfüllt, wird der Fahrer durch ein akustisches oder optisches Signal gewarnt, und der Fahrbetrieb kann nicht aufgenommen werden.

All diesen Verfahren ist zu eigen, dass sie in der Regel zusätzliche Sensoren und/oder Aktuatoren zur Erkennung des Fahrerwunsches, dass eine Hillholderfunktion gewünscht ist, und/oder zur Detektierung des Anfahrwunsches, bzw. zur Durchführung des Verfahrens benötigen.

Aufgabe dieser Erfindung ist es, ein Verfahren zur Durchführung einer zuverlässigen und intuitiv bedienbaren Hillholderfunktion bereitzustellen, das vollständig auf zusätzliche Sensoren oder Aktuatoren verzichtet. Voraussetzung ist allerdings, dass das Fahrzeug mit einer Bremsvorrichtung ausgestattet ist, die in der Lage ist, die Stabilisierung eines Fahrzeugs bei kritischen dynamischen Fahrzuständen durchzuführen. Eine solche Bremsvorrichtung wird auch Elektronisches Stabilitätsprogramm (ESP) oder Dynamische Stabilitätskontrolle (DSC) genannt.

Im Rahmen der Erfindung ist vorgesehen, dass die Hillholderfunktion durch den Fahrer aktiviert wird. Dies geschieht dadurch, dass - nach Stillstand des Fahrzeugs und Abwarten einer bestimmten Zeit bei weiter getretenem Bremspedal - eine zusätzliche kurze Druckerhöhung im Bremssystem durch Aufbringen einer zusätzlichen Kraft am Bremspedal durch den Fahrer die Hillholderfunktion aktiviert. Dieser Fuß-"Kick" aktiviert also die Hillholderfunktion. Weiterhin ist vorgesehen, dass ein weiterer Fußkick die Hillholderfunktion wiederum ausschalten und ein erneuter Fußkick die Hillholderfunktion wieder aktivieren kann, usw. Ein Ausschalten der Hillholderfunktion kann z. B. wünschenswert sein, wenn das an einer Steigung stehende Fahrzeug bewusst zurückrollen soll, um z. B. ein Ausweichen hinter einem zurückrollenden Fahrzeug vor dem Ablauf der zeitgesteuerten Lösefunktion zu ermöglichen.

Bei einem Verfahren zur Steuerung der Bremsanlage eines Fahrzeugs, bei dem in wenigstens einem ersten Betriebszustand bei betätigtem Bremspedal Bremskraft an wenigstens einem Rad des Fahrzeugs unabhängig vom Ausmaß der Pedalbetätigung gehalten wird, und bei dem die Bremskraft nach Vorliegen eines zweiten Betriebszustandes abgebaut wird, ist zum unabhängigen Halten der Bremskraft unabhängig vom Ausmaß der Pedalbetätigung ein zusätzliches Signal des Fahrzeugführers nötig. Weiterhin kann zum Abbau der Bremskraft ein zusätzliches Signal des Fahrzeugführers nötig sein.

Bei einer weiteren vorteilhaften Ausführung der Erfindung wird der Fahrzeuglenker vom Einschalten der Hillholderfunktion durch ein Signal in Kenntnis gesetzt. Dies kann z. B. durch ein akustisches oder optisches Signal erfolgen oder auch aus einer Kombination von akustischem und optischem Signal. Bei der Deaktivierung der Hillholderfunktion würde das Signal dann erlöschen.

Ein Verfahren zur automatischen Aktivierung einer Hillholderfunktion ist in zwei Verfahrensschritte unterteilt. Im ersten Schritt wird dabei eine Erkennung einer Neigung der Fahrbahn gegenüber der Längsachse des Fahrzeugs durchgeführt. In vorteilhafter Weise geschieht dies, indem die üblicherweise vorhandenen Signale für Fahrzeuggeschwindigkeit und Bremsdruck betrachtet werden. Bei einer Bremsung an einer Steigung wird bekanntermaßen ein Teil der kinetischen Energie des sich bewegenden Fahrzeugs in potentielle Energie umgewandelt, es ist also weniger kinetische Energie durch die Bremse in Wärme umzuwandeln. Das bedeutet, daß die Bremsleistung geringer ausfällt und damit auch ein geringerer Bremsdruck und damit Bremskraft nötig ist, um im Vergleich zu einer Bremsung auf einer Fahrbahn ohne Steigung das Fahrzeug zum Stillstand zu bringen.

Dem zweiten Schritt liegt der Gedanke zu Grunde, daß ein an einer Steigung zum Stillstand gebrachtes Fahrzeug mit der Betriebsbremse gegen Zurückrollen gesichert wird. Die Hillholderfunktion wird daher erst eingeschaltet, wenn die Betriebsbremse eine bestimmte Zeit bei stehendem Fahrzeug betätigt wird. Zum Anfahren kann dann in bekannter Weise z. B. der Bremsdruck erst nach einer vorgegebenen Zeit nach Lösen des Bremspedals kontrolliert abgebaut werden.

Bei einer vorteilhaften Ausgestaltung wird an Stelle der oben beschriebenen Zeitverzögerung zum Abbau des Bremsdrucks nach Lösen des Bremspedals eine motorseitig gesteuerte Funktion verwendet. Berücksichtigt werden dabei die Signale von Bremsdruck, Motordrehzahl, die Ableitung der Motordrehzahl sowie die Gaspedalstellung bzw. die direkt von der Gaspedalstellung abhängige Stellung der Drosselklappe. Diese Größen sind vorhanden, bzw. können errechnet werden, so daß auch hier keine zusätzliche Sensorik - insbesondere kein Neigungssensor - nötig ist.

Weiterhin wird berücksichtigt, daß die Funktion nicht dazu geeignet ist, die Handbremse zu ersetzen.

Deswegen ist vorgesehen, den Bremsdruck nach dem Lösen des Bremspedals nur für einen bestimmten Zeitraum aufrecht zu erhalten. Danach ist ein zeitgesteuertes Lösen des Bremsdrucks vorgesehen.

Eine weitere vorteilhafte Ausgestaltung sieht vor, das Reduzieren des Bremsdrucks beim zeitgesteuerten Lösen in zwei Schritten durchzuführen. In vorteilhafter Weise läßt sich dies mit den heute gebräuchlichen diagonal wirkenden Zweikreisbremsanlagen durchführen. Dabei wird zuerst ein Bremskreis drucklos geschaltet. Durch die dann auftretende diagonale Verspannung des Fahrzeugs wird eine zusätzliche Rückmeldung an den Fahrzeugführer gegeben, daß die Hillholderfunktion im Stadium der Deaktivierung ist, und ein Lösen der Bremse unmittelbar bevorsteht. Diese Funktion läßt sich nicht nur mit der vorbeschriebenen Hillholderfunktion durchführen, sondern ist bei allen Hillholderfunktionen anwendbar, bei denen ein diagonales Zweikreisbremssystem vorhanden ist, und die Steuerung der beiden Kreise unabhängig voneinander erfolgen kann.

In vorteilhafter Weise lassen sich auch die Funktionen der automatischen Aktivierung der Hillholderfunktion und das manuelle Aus- bzw. Einschalten der Hillholderfunktion durch den Fahrzeugführer miteinander kombinieren. So ist es z. B. denkbar, daß der Fahrzeugführer die automatische Aktivierung der Hillholderfunktion nutzt, aber die Deaktivierung manuell z. B. über den zuvor beschriebenen Fußkick durchführt.

Die Erfindung betrifft ferner eine Vorrichtung zur Steuerung einer Bremsanlage, die dazu geeignet ist, die beschriebenen Verfahren durchzuführen.

Die Erfindung wird anhand der in den beiliegenden Zeichnungen gezeigten Diagramme näher erläutert. Es zeigen:

Fig. 1 ein Diagramm eines typischen Verlaufs bei Nutzung des Verfahrens zur automatischen Anfahrhilfe, und

Fig. 2 ein Diagramm eines typischen Verlaufs der getriggerten Anfahrhilfe.

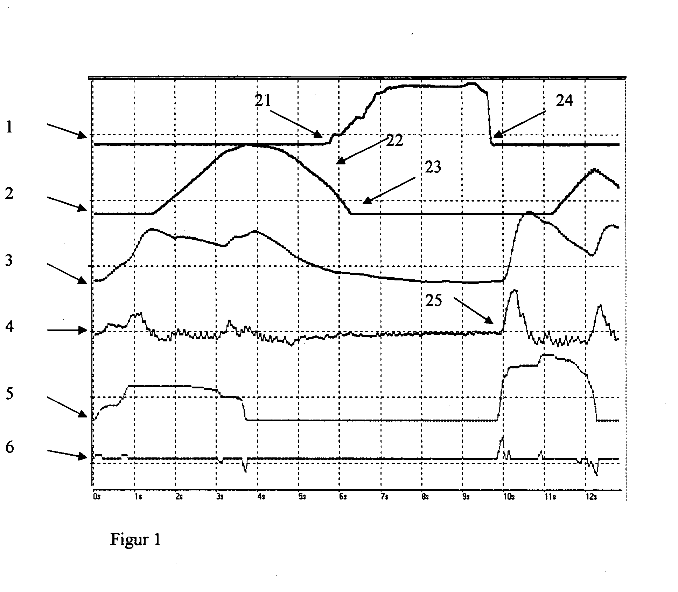

Figur 1 zeigt ein Diagramm mit einem typischen zeitlichen Verlauf einiger Fahrzeugparameter vor und während der Aktivierung der automatischen Anfahrhilfe. Aufgetragen sind dabei ein Bremsdruck 1, eine zugehörige Fahrzeuggeschwindigkeit 2, eine entsprechende Motordrehzahl 3, ein sich daraus ergebender Motordrehzahländerung 4, eine zugehörige Drosselklappenposition 5 sowie eine daraus abgeleitete Drosselklappenpositionsänderung 6. Der aufgezeichnete Bremsdruck 1 ist dabei der vom Fahrer durch die Pedalkraft ins Bremssystem gegebene Bremsdruck, also nicht der vom Bremssystem gehaltene Bremsdruck während der Aktivierung des Hillholders. Aus dem Verlauf der oben angeführten Fahrzeugparameter kann die Bedingung zum Aktivieren der Hillholderfunktion abgelesen werden. Genutzt werden dazu einige getriggerte Funktionen. Erfindungsgemäß kann die Hillholderfunktion nur aktiviert werden, wenn das Fahrzeug zum Stillstand gekommen ist. Dieser Punkt ist mit Trigger 23 erreicht. Zusätzlich muß die mit Trigger 22 bezeichnete Bedingung erfüllt sein:

Beginnend mit einem von Null ansteigenden Bremsdruck, hier durch Trigger 21 gekennzeichnet, werden die diskreten synchronisierten Abtastwerte von Fahrzeuggeschwindigkeit V und Bremsdruck P auf Kontinuität hin untersucht. Der Kontinuitätsfaktor $K_f$ entspricht dem Quotienten aus der fortlaufenden Abtastzahl n und der Bedingung b:

$$K_f = b/n$$

Mit dem Zeitpunkt Trigger 21 werden n=0 und b=0 gesetzt. N inkrementiert bei jedem diskreten Abtastschritt, wohingegen b nur bei folgender Bedingung inkrementiert

$$P_{n-1} < P_n \quad \&\& \quad V_{n-1} >= V_n$$

Die Aktivierung wird jetzt ausgeführt, falls nach dem Stillstand des Fahrzeugs V=0 eine Wartezeit $t_{w1}$ abgelaufen ist und der Kontinuitätsfaktor über einem Schwellwert liegt:

$$K_f > K_{fSchwell.}$$

Trigger 24 und Trigger 25 werden für das automatische Lösen der Bremse beim Anfahren benötigt. Dabei zeigt Trigger 24 an, daß der Fahrer das Bremspedal gelöst hat und durch Trigger 25 wird angezeigt, daß die Motordrehzahl erhöht wurde und also ein Anfahren zu erwarten ist. Mittels dieser beiden Bedingungen ist dann die Vorraussetzung zur Deaktivierung der Hillholderfunktion gegeben.

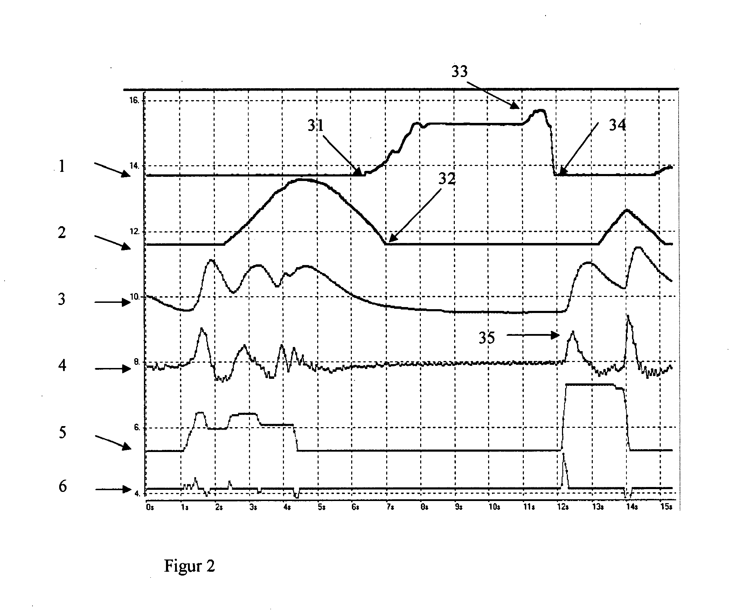

Figur 2 zeigt ein Diagramm mit einem typischen zeitlichen Verlauf einiger Fahrzeugparameter vor und während der Aktivierung der getriggerten Anfahrhilfe. Dabei wird das Fahrzeug bis zum Stillstand abgebremst. Nach einer spezifizierten Wartezeit $t_{w2}$ bei gehaltenem Bremsdruck wird eine kurze Erhöhung des Bremsdrucks durch den Fahrer erwartet, um die Funktion zu aktivieren.

Die Funktion wird somit durch einen Fußkick des Fahrers gezielt ausgelöst, unabhängig von der Längsneigung der Fahrbahn.

Der Stillstand des Fahrzeugs wird in Trigger 32 festgestellt, wobei Trigger 31 den Beginn der Bremsung kennzeichnet. Der Fußkick ist in der Abbildung mit Trigger 33 bezeichnet. Das Triggerkriterium ist sofort erfüllt, wenn die Ableitung des Bremsdrucks einen Schwellwert $P_{dyn}$ überschreitet:

$$dP/dt > P_{dyn}$$

Falls die Aktivierung nicht mehr benötigt wird, kann der Fahrer nun in der zeitlichen Sequenz durch einen weiteren Fußkick die Funktion wieder ausschalten.

Das Ausschalten kann ebenfalls erfolgen, indem der Fahrer das Bremspedal löst und vor dem zeitgesteuerten Abschalten der Funktion den Bremsdruck auf den zum Zeitpunkt Trigger 33 vorliegenden Wert wieder erhöht. Wie in Figur 1 sind Trigger 34 und 35 für das automatische Anfahren vorgesehen.

**Patentansprüche**

1. Verfahren zur Steuerung einer Bremsanlage eines Fahrzeugs mit einer Feststellbrems- bzw. Hillholderfunktion, bei der die Bremskraft an wenigstens einem Rad des Fahrzeugs unabhängig von der Betätigung eines Bremspedals gehalten wird,
   wobei zum unabhängigen Halten der Bremskraft und/oder zum Abbau der zum unabhängigen Halten aufgebrachten Bremskraft ein zusätzliches Signal des Fahrzeugführers nötig ist, das als kurzzeitige Druckerhöhung im Bremssystem durch Aufbringen einer zusätzlichen Kraft durch den Fahrzeugführer auf das Bremspedal mittels eines Fußkicks erzeugt werden kann,
   **dadurch gekennzeichnet, dass**
   die Hillholder-Funktion durch den Fußkick eingeschaltet und ausgeschaltet werden kann.

2. Verfahren nach Anspruch 1,
   **dadurch gekennzeichnet, dass**
   das zusätzliche Signal getriggert wird, wenn die Ableitung des Bremsdrucks P einen Schwellwert $P_{dyn}$ überschreitet.

3. Verfahren nach Anspruch 1,
   **dadurch gekennzeichnet, dass**
   die Hillholderfunktion nach Stillstand des Fahrzeugs und dem Abwarten einer bestimmten Zeit bei weiter getretenem Bremspedal durch den Fußkick aktivierbar ist.

4. Verfahren nach mindestens einem der Ansprüche 1 bis 3,
   **dadurch gekennzeichnet, dass**
   das manuelle Ein- und Ausschalten der Hillholderfunktion durch den Fahrzeugführer mit einer automatischen Aktivierung der Hillholderfunktion kombiniert wird.

5. Verfahren zur Steuerung der Bremsanlage eines Fahrzeugs nach einem der Ansprüche 1 bis 4,

**dadurch gekennzeichnet, dass**
der Fahrzeugführer vom unabhängigen Halten der Bremskraft durch ein Signal informiert wird.

6. Verfahren zur Steuerung der Bremsanlage eines Fahrzeugs nach Anspruch 5,
**dadurch gekennzeichnet, dass**
das Signal ein akustisches und/oder optisches Signal ist.

7. Vorrichtung zur Steuerung der Bremsanlage eines Fahrzeugs,
**dadurch gekennzeichnet, dass**
die Vorrichtung für eine Durchführung des Verfahrens nach einem der Ansprüche 1 bis 6 ausgebildet ist.

**Claims**

1. Method for controlling a brake system of a vehicle having a parking brake or hill holder function, in which the braking force at at least one wheel of the vehicle is maintained independently of the actuation of a brake pedal, an additional signal from the driver of the vehicle being necessary to independently maintain the braking force and/or to reduce the braking force which is applied for the purpose of independently maintaining, it being possible to generate said signal as a brief increase in pressure in the brake system by the driver of the vehicle applying an additional force to the brake pedal by means of a foot kick, **characterized in that** the hill holder function can be switched on and off by means of the foot kick.

2. Method according to Claim 1, **characterized in that** the additional signal is triggered if the derivation of the brake pressure P exceeds a threshold value $P_{dyn}$.

3. Method according to Claim 1, **characterized in that** the hill holder function can be actuated by means of the foot kick once the vehicle is stationary and after waiting for a specific time with the brake pedal depressed further.

4. Method according to at least one of Claims 1 to 3, **characterized in that** the manual switching on and off of the hill holder function by the driver of the vehicle is combined with automatic activation of the hill holder function.

5. Method for controlling the brake system of a vehicle according to one of Claims 1 to 4, **characterized in that** a signal informs the driver of the vehicle about the braking force being independently maintained.

6. Method for controlling the brake system of a vehicle according to Claim 5, **characterized in that** the signal is an audible and/or visible signal.

7. Device for controlling the brake system of a vehicle, **characterized in that** the device is designed for carrying out the method according to one of Claims 1 to 6.

**Revendications**

1. Procédé de commande d'un équipement de freinage d'un véhicule comprenant une fonction de frein de stationnement ou d'encliquetage anti-recul, avec lequel la force de freinage est maintenue sur au moins une roue du véhicule indépendamment de l'actionnement d'une pédale de frein, un signal supplémentaire du conducteur du véhicule étant nécessaire pour maintenir indépendamment la force de freinage et/ou pour supprimer la force de freinage appliquée pour le maintien indépendant, lequel peut être généré sous la forme d'une courte élévation de la pression dans le système de freinage par l'application d'une force supplémentaire par le conducteur du véhicule sur la pédale de frein au moyen d'un mouvement bref du pied, **caractérisé en ce que** la fonction d'encliquetage anti-recul peut être mise en service et hors service par le bref mouvement du pied.

2. Procédé selon la revendication 1, **caractérisé en ce qu'**un signal supplémentaire est déclenché lorsque la dérivée de la pression de freinage P dépasse une valeur de seuil $P_{dyn}$.

3. Procédé selon la revendication 1, **caractérisé en ce que** la fonction d'encliquetage anti-recul peut être activée par le mouvement bref du pied après l'immobilisation du véhicule et l'écoulement d'un temps donné tout en maintenant la pédale de frein enfoncée.

4. Procédé selon l'une des revendications 1 à 3, **caractérisé en ce que** la mise en service et hors service manuelle de la fonction d'encliquetage anti-recul par le conducteur du véhicule est combinée avec une activation automatique de la fonction d'encliquetage anti-recul.

5. Procédé de commande de l'équipement de freinage d'un véhicule selon l'une des revendications 1 à 4, **caractérisé en ce que** le conducteur du véhicule est informé par un signal du maintien indépendant de la force de freinage.

6. Procédé de commande de l'équipement de freinage d'un véhicule selon la revendication 5, **caractérisé en ce que** le signal est un signal sonore et/ou visuel.

**7.** Dispositif de commande de l'équipement de freinage d'un véhicule, **caractérisé en ce que** le dispositif est configuré pour mettre en oeuvre le procédé selon l'une des revendications 1 à 6.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19931345
- DE 19621628
- DE 19950034
- DE 19950162 A1
- DE 19611360 A1